Europäisches Patentamt

European Patent Office

Office européen des brevets

(11) Publication number: **0 199 858**
**B1**

(12) **EUROPEAN PATENT SPECIFICATION**

(45) Date of publication of patent specification: 30.08.89

(21) Application number: 85302766.2

(22) Date of filing: 19.04.85

(51) Int. Cl.⁴: **E 04 B 1/60,** E 04 C 2/26

(54) **A joint in prefabricated insulated panels.**

(43) Date of publication of application:
05.11.86 Bulletin 86/45

(45) Publication of the grant of the patent:
30.08.89 Bulletin 89/35

(84) Designated Contracting States:
AT BE CH DE FR GB IT LI LU NL SE

(56) References cited:
EP-A-0 051 351
BE-A- 808 361
FR-A-2 271 350
GB-A-1 595 180

(73) Proprietor: **PERFIL EN FRIO S.A. (PERFRISA)**
**Santa Engracia, 2**
**31014 Pamplona (ES)**

(72) Inventor: **Larrea, D. Juan**
**Santa Engracia, 2**
**E-31014 Pamplona (ES)**

(74) Representative: **Hallam, Arnold Vincent et al**
**E.N. LEWIS & TAYLOR 5 The Quadrant**
**Coventry, CV1 2EL (GB)**

Courier Press, Leamington Spa, England.

## Description

This invention relates to a joining arrangement for insulated prefabricated panels of the kind made up of two sheets of metal or other material between which there is inserted a filler material possessing heat and sound-proofing qualities.

EP—A—0051351 discloses a panel joining system of the kind, corresponding to the prior art portion of claim 1, that comprises two rigid and preferably metal plates between which a suitable insulating fill material is inserted. The panels are arranged in flush formation to one another, and each one possesses a grooved inset with respect to the plane thereof at the end on one of its faces at least, for the purpose of inserting a join cover to conceal the connection between panels from the outside. Each panel possesses also a second innermost slot or groove close by to the first such groove as described, for the purpose of housing a bolt head or nut whose function is to secure the joint between panels and, if applicable, to attach them to a stationary anchorage.

The present invention seeks to provide an improved panel joining arrangement, and to achieve a tight, rigid and positive joint between either identical or non-identical panels, and accordingly the joint is either symmetrical or non-symmetrical.

Accordingly the prsent invention provides a panel joining arrangement for panels, said panels being of the type which include first and second sheets having an insulating fill material therebetween, said panels having end portions to be joined, the end portions being arranged flush with one another, said arrangement comprising:

a) the first sheet of each of the two panels which sheet includes a first shaped section near one end of the panel, said shaped section being a first groove with respect to the exterior plane of the panel;

b) a load spreader plate for insertion into corresponding first shaped sections of the panels to be joined, said load spreader plate being operative for holding the panels in abutment;

c) means for retaining said load spreader plate in position between the abutting panels for holding said panels;

d) a second shaped section in the first sheet of each of the two panels, said first groove of each first sheet lying along said rib and between said rib and said one end of said panel;

e) a third shaped section in the first sheet of each of the two panels;

f) a cover for locking engagement with said third shaped sections for concealing said ribs and the join of said panels; characterised in that said arrangement further comprises:

g) a sealing member having shaped end portions for locking engagement in the corresponding first shaped sections of the first and second panels to be joined, said sealing member being securable between said load spreader plate and said first sheets; and

h) said second shaped section being a first rib with respect to the exterior plane of the panel.

Preferably the arrangement comprises a fourth shaped section in each said second sheet near said one end of said panel, said shaped section being a second groove with respect to the exterior plane of the panel, and a sealing member having shaped end portions for locking engagement in the corresponding fourth shaped sections of the panels.

In a preferred form of the invention each groove is of U-shaped cross-section, one arm of the U adjacent said panel one end leaning inwardly of the groove in a direction outwardly of the groove, and the or at least one of the sealing members is of U-shape cross-section, each arm of the sealing member leaning inwardly of the sealing member such that on engagement in said grooves each arm of the sealing member securely abuts against the correspondingly shaped arm of the groove.

Conveniently each of said grooves is an elongated cavity which takes up the whole or part of the width of each panel and is of U-shaped cross-section, one of whose arms leans inwardly of the groove in a direction outwardly thereof; and wherein at least one of the sealing members is of U-shaped cross-section, each arm of which defines a first length by way of a seat which is substantially parallel to the plane of the sealing member, a second intermediate length bracket, and a third sloping length abutting the panels by way of the first lengths, the arms are accommodated in the grooves in said panels and press the panels together by the action of the third sloping lengths.

Advantageously the load spreader plate is of substantially U-shaped cross-section having a web portion of large width relative to the arms of the U and wherein said arms are substantially at right angles to the web and locate in the first shaped sections.

The grooves on the same surface may be at the same distance from the edge of the panels or not.

Preferably at least one curved, inclined, sloping or other shaped configuration is formed on one of the sheets by stamping or pressing which reduce the panel overall length as measured along a tangential line to the portions that protrude most from the panel outline with respect to the overall length of the other sheet as measured in an identical manner, so that in the panel construction, the ends thereof are offset from one another by an angle which is in proportion to the difference in lengths, $d=L_1-L_2$.

The present invention is further described hereinafter, by way of example, with reference to the accompanying drawings in which:

Figure 1 is a part-sectional elevation of two joining arrangements for panels showing a symmetrical joint;

Figure 2 is an enlarged part-sectional elevation of a symmetrical joint between two insulating panels;

Figure 3 is a part-sectional elevation of an asymmetrical joint between insulated panels; and

Figure 4 is a diagrammatic view of a panel with an offset angle obtained by means of a curve from two straight end pieces and shaped portions in one sheet of the panel.

Referring to the drawings, these show a joining arrangement between prefabricated insulated panels (1) of the kind made up from two plates (1a) and (1b) (upper and lower respectively as shown in the figures) between which there is sandwiched a fill material (1c) which has heat and sound proofing properties. This fill material is bounded at the panel edge by a gasket seal (6).

Each sheet (1a) and (1b) possesses a flange or a tight bend (100, 101) at the side edges which are to be joined together.

This bend (100) on sheet (1a) (that is, the upper sheet in the drawings) clasps the edge ($6_1$) of the gasket seal (6), whilst the other edge ($6_2$) rests upon the bend (101) in sheet (1b).

The gasket seal (6) possesses a central area ($6_3$) which cushions the joint between the two panels.

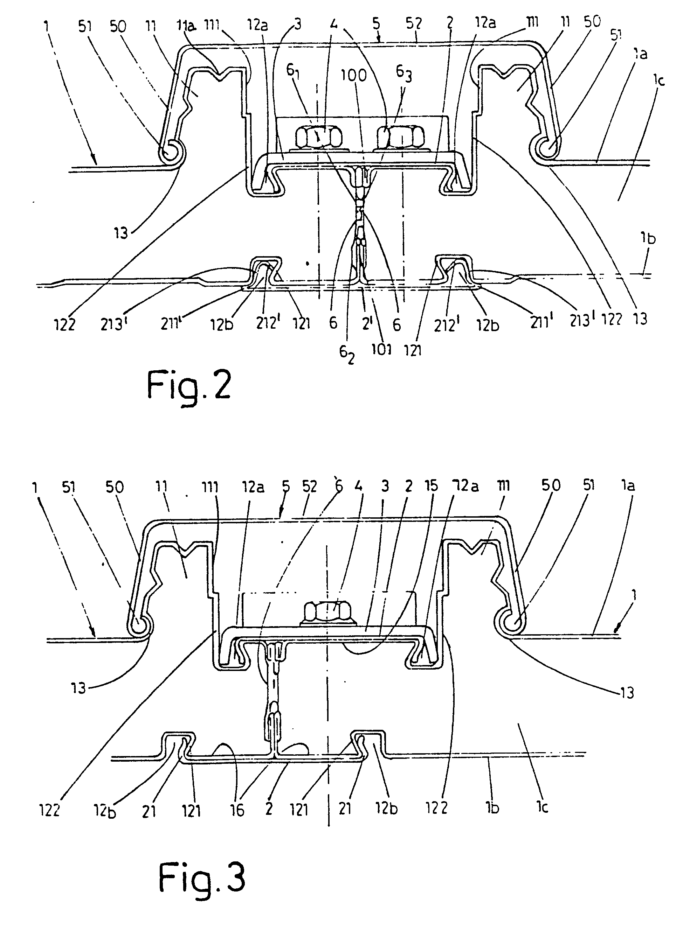

The end regions of the panels shown in Figure 2 are symmetrical in shape, and as may be seen from that figure, each one defines:

a lower groove (12b) in its lower sheet (1b),

an upper groove (12a) in its upper sheet vertically opposite the lower groove,

a rib or tongue (11), adjacent to the upper groove (12a), which protrudes from the upper sheet (1a) on each panel (1),

a recess (13) for assembling other parts of the joint (explained elsewhere).

The joint shown in Figure 3 is asymmetrical, and it is here it may be seen that the lower groove (12b) on the lower sheet (1b) is offset with respect to the upper groove (12a) on the upper sheet (1a).

The joint being dealt with here also comprises:

a sealing member (2),

a load spreader plate (3),

securing arrangements (4), and

a joint cover (5).

Upper and lower grooves (12a) and (12b) are identical to one another, and each possesses a "U" shaped cross-section where one of the arms (121) is negatively sloped from the web, i.e. leans inwardly of the groove in a direction outwardly of the groove.

Ribs or tongues (11) protrude with respect to the upper sheet (1a) of panel (1) and one wall (111) of each tongue is common to one arm (122) of the adjacent groove (12a) on the upper sheet (1a).

Recess (13), which is preferably half round in section, is provided on the very sheet (1a) of panel (1) which defines the tongue (11), and may be located upon the panel (1) itself, on the tongue (11) or, preferably where the two meet together as is shown on the drawings.

Tongue (11) possesses protrusions or indentations (11a) which afford it improved stiffness.

At least one of the sealing members is a single-piece body (2) in a "U" section having a very wide web and not very long arms (21). These arms (21) are curved in a convex-concave fashion in the form of two successive and facing curved lengths. Both sealing members may be identical to one another (Figure 3).

Optionally, and in accordance with Figure 2, one of the sealing members may be a single-piece body (2) in a "U" section having a very wide web and not very long arms (21). These arms (21) define three successive lengths as follows: a first length (211) that is parallel or substantially parallel to the web; a second or intermediate length (213), and a third length in a slope (212) facing inwards. In this case, the outer face of the sealing member (2) protrudes from the outside face of the lower panel (1b).

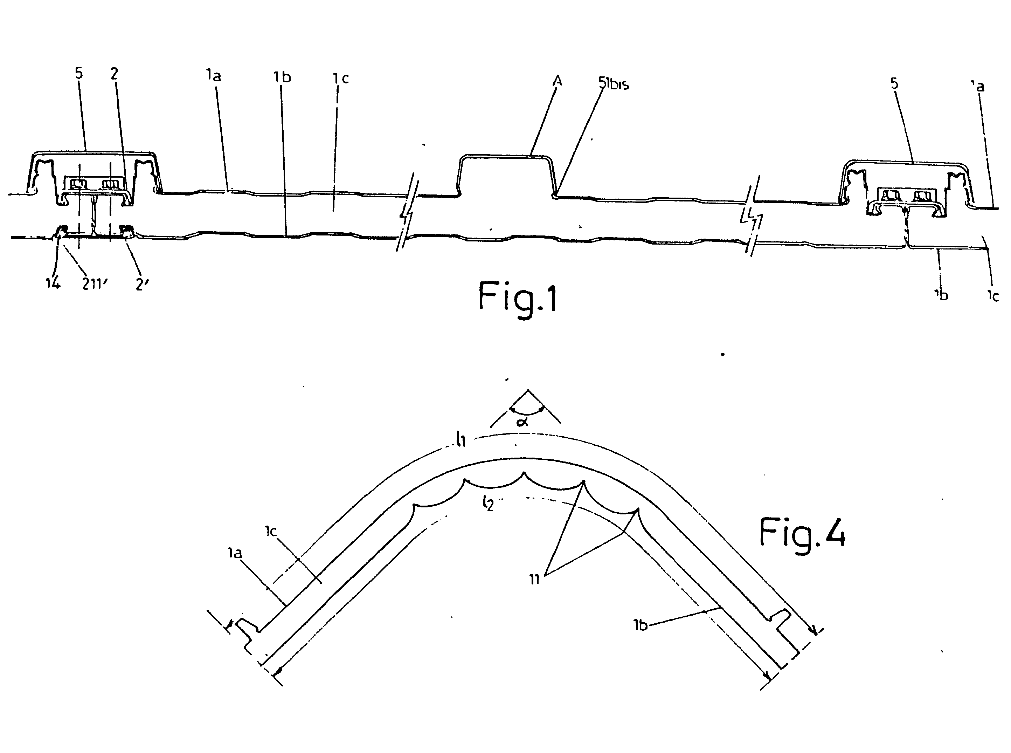

As a further option, lower plate (1b) may, in the event of embodying a sealing member (2'), define undercuts (14) (see Figure 1) in which is seated portion (211') of the sealing member (2') where the web of this latter lies in the same plate as the lower sheet (1b).

All these options are interchangeable with one another.

The load spreader plate (3) is a single piece body possessing a "U" section with a wide web and short arms. Said arms are accommodated in grooves (12a) on the upper sheet (1a).

The joint cover (5) is a single piece body possessing a "U" section whose arms (50) may lie at right angles to the web (52) or, preferably diverge slightly away from one another. The tips (51) of the arms (50) are curved in shape and bent about themselves.

The invention is completed with the securing arrangements (4), which preferably comprise bolts that may lie in one row (Figure 3) or in two rows where the bolts are staggered (Figures 1 and 2), or in other similar arrangements.

With the make up as described above, assembly is carried out as follows:

panels (1) are placed in abutment to one another;

sealing members (2, 2') are applied to either side and engaged by pressing. Their arms (21) are accommodated in grooves (12a, 12b) and embrace the sloping arm (121) thus forcing the panels (1) towards each other;

load spreader plate (3) is inserted in a superimposed position upon one of the sealing members (2), and its arms too are accommodated in the grooves on that side of the panel;

a structure (not illustrated) is attached to the assembly by means of securing arrangements (4), which in this case are bolts which are inserted through the fastening piece (3), the sealing pieces (2, 2') and the panels (1) which are previously drilled with holes;

the outside assembly is insulated by inserting the joint cover (5), for which purpose its sections (5) are housed in recesses (13) provided on the upper sheets (1a).

The invention also provides for the possibility of obviating the need for joining the lower sheets (1b), in which case there would be no grooves (12b) or lower sealing members (2), and a total continuity could exist between the lower sheets (1b) of the two panels to be joined (See Figure 1, right hand joint).

A tongue (A) may also be provided on the upper surface of the panel. This gives the joined panels an appearance of continuity since each tongue (A) may be shaped in a similar manner to the covers (5) to give the appearance of a joint.

The tongue (A) in the area where same engages with the panel possesses an indentation (51) which prevents the filler material (1c) from becoming detached from the upper panel (1a).

**Claims**

1. A panel joining arrangement for panels, said panels (1) being of the type which include first (1a) and second (1b) sheets having an insulating fill material (1c) therebetween, said panels having end portions to be joined, the end portions being arranged flush with one another, said arrangement comprising:

a) the first sheet (1a) of each of the two panels which sheet includes a first shaped section (12a) one end of the panel (1), said shaped section being a first groove (12a) with respect to the exterior plane of the panel;

b) a load spreader plate (3) for insertion into corresponding first shaped sections of the panels to be joined, said load spreader plate being operative for holding the panels in abutment;

c) means (4) for retaining said load spreader plate (3) in position between the abutting panels for holding said panels;

d) a second shaped section (11) in the first sheet (1a) of each of the two panels, said first groove (12a) of each first sheet lying along said rib and between said rib and said one end of said panel;

e) a third shaped section (13) in the first sheet (1a) of each of the two panels;

f) and a cover (5) for locking engagement with said third shaped sections (13) for concealing said ribs and the join of said panels;
characterised in that said arrangement further comprises:

g) a sealing member (2) having shaped end portions for locking engagement in the corresponding first shaped sections of the first and second panels to be joined, said sealing member being securable between said load spreader plate (3) and said first sheets (1a); and

h) said second shaped section (11) being a first rib (11) with respect to the exterior plane of the panel.

2. An arrangement as claimed in claim 1 further comprising a fourth shaped section (12b) in each said second sheet near said one end of said panel, said shaped section being a second groove with respect to the exterior plane of the panel, and a sealing member (2) having shaped end portions for locking engagement in the corresponding fourth shaped sections of the panels.

3. An arrangement as claimed in claim 1 or 2 wherein each said groove (12a, 12b) is of U-shaped cross-section, one arm of the U adjacent said panel one end leaning inwardly of the groove in a direction outwardly of the groove, and the or at least one of the sealng members (2) is of U-shape cross-section, each arm of the sealing member leaning inwardly of the sealing member such that on engagement in said grooves each arm of the sealing member securely abuts against the correspondingly shaped arm of the groove.

4. An arrangement as claimed in claim 1 or 2 wherein each of said grooves (12b) is an elongated cavity which takes up the whole or part of the width of each panel and is of U-shaped cross-section, one of whose arms leans inwardly of the groove in a direction outwardly thereof; and wherein at least one of the sealing members (2) is of U-shaped cross-section, each arm of which defines a first length (211) by way of a seat which is substantialy parallel to the plane of the sealing member, a second intermediate length bracket (213), and a third sloping length (212) facing inwardly of the sealing member such that while abutting the panels by way of the first lengths, the arms are accommodated in the grooves (12b) in said panels and press the panels together by the action of the third sloping lengths.

5. An arrangement as claimed in claim 3 or 4 when appendant to claim 2 wherein the sealing members are identical to one another.

6. An arrangement as claimed in claim 2 or any of claims 3 to 5 when appendant to claim 2 wherein the grooves (12a, 12b) in any single panel are positioned opposite one another.

7. An arrangement as claimed in claim 4 in which each panel is provided with an undercut (14) in relation to the first length (14) in relation to the first length (211) of the sealing member so that said sealing member lies substantially flush with the external plane of the panel.

8. An arrangement as claimed in any preceding claim wherein said load spreader plate (3) is of substantially U-shaped cross-section having a web portion of large width relative to the arms of the U and wherein said arms are substantially at right angles to the web and locate in the first shaped sections (12a).

9. An arrangement as claimed in any preceding claim wherein said third shaped sections (13) are in the form of recesses and wherein said cover (5) is of substantially U-shaped cross-section, the arms of which have substantially rounded end portions for locating engagement in said third shaped sections (13).

10. An arrangement as claimed in any preceding claim wherein the outside of the panels has tongues (A) whose external shape is substantially identical to that of the cover (5).

11. An arrangement as claimed in claim 10 wherein said tongues (A) have indentations (51) at their bases for preventing the fill material (1c) from becoming detached from the upper sheet (1a).

12. An arrangement as claimed in any preceding claim wherein the end of the sheets (1a, 1b) of each panel have respective flanges (100, 101) directed inwardly of the panel, and a sealing device (6) disposed at the end of each panel, said sealing device extending between and being gripped by said flanges.

13. An arrangement as claimed in any preceding claim wherein at least one curved, inclined, sloping or other shaped configuration is formed on one of the sheets (1a, 1b) by stamping or pressing which reduce the panel overall length ($L_2$) as measured along a tangential line to the portions that protrude most from the panel outline with respect to the overall length ($L_1$) of the other sheet as measured in an identical manner, so that in the panel construction, the ends thereof are offset from one another by an angle which is in proportion to the difference in lengths, $d = L_1 - L_2$.

**Patentansprüche**

1. Verbindungseinheit für Paneele (1), welche eine erste (1a) und eine zweite (1b) Lage mit einem dazwischen angeordneten Isolationsfüllmaterial (1c) besitzen und miteinander zu verbindende Endabschnitte aufweisen, die bündig zueinander angeordnet sind, mit:
a) einem ersten geformten Abschnitt (12a) in de Nähe von einem Ende des Peneeles (1) an der ersten Lage (1a) eines jeden der beiden Paneele, wobei dieser geformte Abschnitt eine erste Nut (12a) relativ zur Außenseite des Peneeles ist;
b) einer Lastverteilerplatte (3) zum Einsetzen in entsprechende erste geformte Abschnitt der miteinander zu verbindenden Paneele, wobei die Lastverteilerplatte die Paneele so hält, daß sie aneinander stoßen;
c) Einrichtungen (4) zum Haltern der Lastverteilerplatte (3) zwischen den aneinander stoßenden Paneelen, um die Paneele zu haltern;
d) einem zweiten geformten Abschnitt (11) in der ersten Lage (1a) von jedem der beiden Paneele, wobei die erste Nut (12a) einer jeden ersten Lage entlang einer Rippe und zwischen der Rippe und dem einen Ende des Paneeles liegt;
e) einem dritten geformten Abschnitt (13) in der ersten Lage (1a) von jedem der beiden Paneele;
f) und einer Abdeckung (5) für einen Verriegelungseingriff mit den dritten geformten Abschnitten (13), um die Rippen und die Verbindung der Paneele unsichtbar zu machen;
dadurch gekennzeichnet, daß die Einheit desweiteren umfaßt:
g) ein Dichtungselement (2) mit geformten Endabschnitten für einen Verriegelungseingriff mit den entsprechenden ersten geformten Abschnitten der miteinander zu verbindenden ersten und zweiten Paneele, wobei das Dichtungselement zwischen der Lastverteilerplatte (3) und den ersten Lagen und (1a) befestigbar ist;
h) wobei der zweite geformte Abschnitt (11) eine erste Rippe (11) relativ zur Außenseite des Paneeles ist.

2. Einheit nach Anspruch 1, dadurch gekennzeichnet, daß sie desweiteren einen vierten deformten Abschnitt (12b) in jeder der zweiten Lagen in der Nähe des einen Endes des Paneeles aufweist, bei dem es sich um eine zweite Nut relativ zur Außenseite des Paneeles handelt, und ein Dichtungselement (2) mit geformten Endabschnitten für einen Verriegelungseingriff in den entsprechenden vierten geformten Abschnitten der Paneele.

3. Einheit nach Anspruch 1 oder 2, dadurch gekennzeichnet, daß jede Nut (12a, 12b) einen U-förmigen Querschnitt besitzt, wobei sich ein Arm des U benachbart zu dem einen Ende des Paneeles in einer Richtung von der Nut nach außen einwärts in die Nut erstreckt und daß oder mindestens eines der Dichtungselemente (2) einen U-förmigen Querschnitt besitzt, wobei sich jeder Arm des Dichtungselementes derart vom Dichtungselement nach innen erstreckt, daß bei einem Eingriff in den Nuten jeder Arm des Dichtungselementes fest gegen den entsprechend geformten Arm der Nut stößt.

4. Einheit nach Anspruch 1 oder 2, dadurch gekennzeichnet, daß jede Nut (12b) ein länglicher Hohlraum ist, der die gesamte Breite eines jeden Paneeles oder einen Teil davon aufnimmt und einen U-förmigen Querschnitt besitzt, wobei sich einer ihrer Arme in einer Richtung von der Nut nach außen in die Nut hineinerstreckt und wobei mindestens eines der Dichtungselemente (2) einen U-förmigen Querschnitt aufweist, von dem jeder Arm mit Hilfe eines Sitzes, der im wesentlichen parallel zur Ebene des Dichtungselementes angeordnet ist, eine erste Länge (211), eine zweite mittlere Armlänge (213) und eine dritte schräge Länge (212) aufweist, die vom Dichtungselement nach innen weist, so daß die Arme in den Nuten (12b) der Paneele aufgenommen werden, wenn die Paneele mit Hilfe der ersten Längen aneinanderstoßen, und die Paneele durch die Wirkung der dritten schrägen Längen zusammengepreßt werden.

5. Einheit nach Anspruch 3 oder 4 in Verbindung mit Anspruch 2, dadurch gekennzeichnet, daß die Dichtungselemente identisch sind.

6. Einheit nach Anspruch 2 oder einem der Ansprüche 3 bis 5 in Verbindung mit Anspruch 2, dadurch gekennzeichnet, daß die Nuten (12a, 12b) in einem einzigen Paneel entgegengesetzt zueinander angeordnet sind.

7. Einheit nach Anspruch 4, dadurch gekennzeichnet, daß jedes Paneel mit einer Hinterschneidung (14) relativ zur ersten Länge (211) des Dichtungselementes versehen ist, so daß das Dichtungselement zur Außenseite des Paneeles im wesentlichen bündig liegt.

8. Einheit nach einem der vorangehenden Ansprüche, dadurch gekennzeichnet, daß die Lastverteilerplatte (3) einen im wesentlichen U-förmigen Querschnitt mit einem Stegabschnitt einer großen Breite relativ zu den Armen des U besitzt und daß die Arme im wesentlichen rechtwinklig zum Steg in den ersten geformten Abschnitten (12a) angeordnet sind.

9. Einheit nach einem der vorangehenden Ansprüche, dadurch gekennzeichnet, daß die dritten geformten Abschnitte (13) die Form von Ausnehmungen besitzen und daß die Abdeckung (5) einen im wesentlichen U-förmigen Querschnitt aufweist, deren Arme im wesentlichen abgerundete Endabschnitte für einen Eingriff in die dritten geformten Abschnitte (13) aufweisen.

10. Einheit nach einem der vorangehenden Ansprüche, dadurch gekennzeichnet, daß die Außenseite der Paneele Zungen (A) aufweist, deren Außerform im wesentlichen mit der der Abdeckung (5) identisch ist.

11. Einheit nach Anspruch 10, dadurch gekennzeichnet, daß die Zungen (A) an ihrer Basis Vertiefungen (51) besitzen, die verhindern, daß das Füllmaterial (1c) von der oberen Lage (1a) gelöst wird.

12. Einheit nach einem der vorangehenden Ansprüche, dadurch gekennzeichnet, daß das Ende der Lagen (1a, 1b) eines jeden Paneeles entsprechende Flansche (100, 101) besitzt, die in bezug auf das Paneel einwärts gerichtet sind, und daß am Ende eines jeden Paneeles eine Dichtungsvorrichtung (6) vorgesehen ist, die sich zwischen den Flanschen erstreckt und von diesen ergriffen wird.

13. Einheit nach einem der vorangehenden Ansprüche, dadurch gekennzeichnet, daß mindestens eine gekrümmte, geneigte, schräge oder anders geformte Ausgestaltung auf einer der Lagen (1a, 1b) durch Stanzen oder Pressen vorgesehen ist, die die Gesamtlänge ($L_2$) des Paneeles gemessen entlang einer tangentialen Linie zu den Abschnitten, die von der Außenseite des Paneeles am weitesten vorstehen, relativ zur Gesamtlänge ($L_1$) der anderen Lage gemessen in identischer Weise herabsetzen, so daß die Enden des Paneeles um einen Winkel gegeneinander versetzt sind, der zur Längendifferenz $d = L_1 - L_2$ proportional ist.

## Revendications

1. Dispositif de jonctionnement de panneaux, les dits panneaux (1) étant du type comportant une première feuille (1a) et une deuxième feuille (1b) avec interposition d'un matériau de remplissage isolant (1c) entre eux, les dits panneaux comportant des extrémités à jonctionner, ces extrémités étant jointives l'une contre l'autre, le dit dispositif comprenant:

a) la première feuille (1a) de chacun des deux panneaux, feuille comportant une première section profilée (12a) près d'une extrémité du panneau (1), la dite section profilée formant une première rainure (12a) par rapport au plan extérieur du panneau;

b) une plaque de répartition de la charge (3) s'insérant dans les premières sections profilées correspondantes des panneaux à jonctionner, la dite plaque de répartition de la charge agissant de façon à maintenir les panneaux en butée;

c) moyens (4) pour maintenir la dite plaque de répartition de la charge (3) en plae entre les panneaux jointifs, pour retenir les dits panneaux;

d) une deuxième section profilée (11) de la première feuille (1a) de chacun des deux panneaux, la dite première rainure (12a) de chaque première feuille se trouvant le long de la dite nervure et entre la dite nervure et une extrémité du dit panneau;

e) une troisième section profilée (13) sur la première feuille (1a) de chacun des deux panneaux;

f) et un couvre-joint (5) venant se verrouiller avec les troisièmes sections profilées (13) pour cacher les dites nervures et le jonctionnement des dits panneaux;

caractérisé en ce que le dit dispositif comprend également:

g) un élément d'étanchéité (2) ayant des extrémités profilées pour venir s'engager dans les premières sections profilées du premier panneau et du deuxième panneau à jonctionner, le dit élément d'étanchéité pouvant se fixer entre la plaque de répartition de la charge (3) et les premières feuilles (1a); et

h) la dite deuxième section profilée (11) étant une première nervure (11) par rapport au plan extérieur du panneau.

2. Dispositif suivant revendication 1, comprenant en outre une quatrième section profilée (12b) dans chaque deuxième feuille à proximité d'une extrémité du dit panneau, la dite section profilée étant une seconde rainure par rapport au plan extérieur du panneau, et un élément d'étanchéité (2) comportant des extrémités profilées pour venir s'engager dans les quatrièmes sections profilées correspondantes des panneaux.

3. Dispositif suivant revendication 1 ou 2, dans lequel chaque rainure (12a, 12b) a une section transversale en forme de U, une branche du U adjacente au dit panneau présentant une extrémité avec inclinaison vers l'intérieur de la rainure dans un sens dirigé vers l'extérieur de la rainure, et l'élément d'étanchéité ou au moins un des éléments d'étanchéité (2) ayant une section transversale en forme de U, chaque branche de l'élément d'étanchéité ayant une inclinaison ver l'intérieur de l'élément d'étanchéité, de sorte qu'en s'engagement dans les dites rainures, chaque branche de l'élément d'étanchéité vient buter contre la branche profilée correspondante de la rainure.

4. Dispositif suivant revendication 1 ou 2, caractérisé en ce que chacune des dites rainures (12b) est une cavité allongée occupant la totalité ou une partie de la largeur de chaque panneau et ayant une section transversale en forme de U, dont une des branches présente une inclinaison vers l'intérieur de la rainure en direction de l'extérieur de celle-ci; et caractérisé en ce qu'au moins un des éléments d'étanchéité (2) a une section transversale en forme de U, dont chaque branche définit une première longueur (211) formant une portée sensiblement parallèle au plan de l'élément d'étanchéité, un deuxième support de longueur intermédiare (213), et une troisième longueur en pente (212) tournée vers l'intérieur de l'élément d'étanchéité, de façon que, lorsque les panneaux sont rendus jointifs par les premières longueurs, les branches viennent se loger dans les rainures (12b) des dits panneaux et viennent comprimer les panneaux l'un contre l'autre sous l'action des troisièmes longueurs inclinées.

5. Dispositif suivant revendication 3 ou 4, dépendant de la revendication 2, caractérisé en ce que les éléments d'étanchéité sont identiques les uns par rapport aux autres.

6. Dispositif suivant revendication 2 ou l'une quelconque des revendications 3 à 5, dépendant de la revendication 2, caractérisé en ce que les rainures (12a, 12b) de n'importe quel panneau individuel sont positionnées de façon à s'opposer l'une à l'autre.

7. Dispositif suivant revendication 4, dans lequel chaque panneau comporte un évidement (14) en relation avec la première longueur (211) de l'élément d'étanchéité de façon que le dit élément d'étanchéité vienne sensiblement affleurer le plan extérieur du panneau.

8. Dispositif suivant l'une quelconque des revendications précédentes,· caractérisé en ce que la plaque de répartition de la charge (3) a une section transversale sensiblement en forme de U, comportant une âme de grande largeur par rapport aux branches du U, et caractérisé en ce que les dites branches sont sensiblement à angle droit par rapport à l'âme, et sont situées dans les premières sections profilées (12a).

9. Dispositif suivant l'une quelconque des revendications précédentes, caractérisé en ce que les dites troisièmes sections profilées (13) présentent la forme d'évidements et caractérisé en ce que le dit couvre-joint (5) a une section transversale sensiblement en forme de U, dont les branches ont des extrémités sensiblement arrondies pour positionner leur engagement dans les dites troisièmes sections profilées (13).

10. Dispositif suivant l'une quelconque des revendications précédentes, caractérisé en ce que l'extérieur des panneaux présente des languettes (A) dont la forme extérieure est sensiblement identique à celle du couvre-joint (5).

11. Dispositif suivant revendication 10, caractérisé en ce que les dites languettes (A) comportent des évidements (51) à leurs bases pour empêcher le matériau de remplissage (1c) de se détacher de la feuille supérieure (1a).

12. Dispositif suivant l'une quelconque des revendications précédentes, caractérisé en ce que l'extrémité des feuilles (1a, 1b) de chaque panneau présente des bords rabattus (100, 101) dirigés vers l'intérieur du panneau, et un dispositif d'étanchéité (6) disposé à l'extrémité de chaque panneau, le dit dispositif d'étanchéité s'étendant entre les bords rabattus et étant serré par ceux-ci.

13. Dispositif suivant l'une quelconque des revendications précédentes, caractérisé par au moins une configuration incurvée, inclinée, en pente, ou d'une autre forme quelconque, réalisée sur l'une des feuilles (1a, 1b) par emboutissage, réduisant la longueur la longueur hors tout du panneau ($L_2$) mesurée le long d'une ligne tangentielle aux parties qui dépassent le plus du contour du panneau par rapport à la longueur hors tout ($L_1$) de l'autre feuille mesurée de mainière identique, de sorte que, dans la construction du panneau, les extrémités de celui-ci sont décalées par rapport à une autre extrémité suivant un angle proportionnel à la différence de longueur, $d=L_1-L_2$.

Fig.1

Fig.4

EP 0 199 858 B1

Fig.2

Fig.3